# EUROPEAN PATENT APPLICATION

(11) **EP 4 703 191 A1**
(43) Date of publication of application: **04.03.2026**
(21) Application number: 24796131.1
(22) Date of filing: 24.04.2024
(51) Int. Cl.: B60L 58/13, B60L 58/27, B60L 53/62

(54) **CHARGING CONTROL CIRCUIT AND METHOD, AND VEHICLE**

(30) Priority: 26.04.2023 CN 202310469869
(71) Applicant: Shanghai Lixiang Automobile Co., Ltd., Shanghai 201800 (CN)
(72) Inventor: FU, Zhimin, Shanghai 201800 (CN); LIU, Shaowei, Shanghai 201800 (CN)
(74) Representative: Maiwald GmbH
(86) International application number: PCT/CN2024/089635
(87) International publication number: WO 2024/222755

(57) **Abstract**

A charging control circuit, comprising a traction driving module (2), an energy storage module (5), a switch module (3), a detection module (4) and a control module, wherein a first end of the traction driving module is electrically connected to a positive electrode of a traction battery (1); a second end of the traction driving module is electrically connected to a negative electrode of the traction battery, a negative electrode end of a charging interface (6) and a second end of the energy storage module; a third end of the traction driving module is electrically connected to a first end of the switch module; a second end of the switch module is respectively electrically connected to a first end of the energy storage module and a positive electrode end of the charging interface; and the detection module is electrically connected to the second end of the switch module, and is used for acquiring a sampled voltage. The charging control circuit meets the requirement that only one detection module is provided in a control circuit to recognize the state of a switch module. In addition, further disclosed are a charging control method and a vehicle.

## Description

### CROSS REFERENCE TO RELATED APPLICATIONS

The application is based on and claims priority to Chinese patent application No. 202310469869.X, filed on April 26, 2023, the entire contents of which are incorporated herein by reference.

### TECHNICAL FIELD

The disclosure relates to the field of vehicle control technology, in particular to a charging control circuit, a method and a vehicle.

### BACKGROUND

With the development of electric drive technology and power components in recent years, the development of new energy vehicles has entered the high-voltage stage, and an increasing number of automotive manufacturers have begun to develop high-voltage platforms. However, the existing direct current (DC) charging piles are mainly low-voltage charging piles. To address this compatibility issue, electric vehicles with high-voltage platforms need to be equipped with a voltage boost system to boost the voltage of the low-voltage charging pile to high voltage before charging the high-voltage battery. In related arts, a relay is usually used to monitor the working state of the voltage boost system of the electric vehicle. Currently, it is necessary to install detection modules at both ends of the relay respectively to obtain voltages at both ends of the relay. By comparing the voltages at both ends, it may be determined whether the relay is switched on or off normally. However, the installation of the two detection modules may lead to problems such as high overall cost and large space occupation of the charging control circuit of the electric vehicle.

### SUMMARY

To solve all or at least part of the above problems, the disclosure discloses a charging control circuit, a charging control method and a vehicle, which meets a requirement for arranging only one detection module in the charging control circuit to identify a state of a switch module, thereby reducing material costs and decreases space occupation.

In a first aspect, an embodiment of the disclosure discloses a charging control circuit. The circuit includes: a power drive module, an energy storage module, a switch module, a detection module and a control module.

A first end of the power drive module is electrically connected to a positive electrode of a power battery; a second end of the power drive module is electrically connected to a negative electrode of the power battery, a negative terminal of a charging interface, and a second end of the energy storage module; and a third end of the power drive module is electrically connected to a first end of the switch module; a second end of the switch module is electrically connected to a first end of the energy storage module and a positive terminal of the charging interface respectively; the detection module is electrically connected to the second end of the switch module to acquire a sampling voltage.

The control module is configured to send a state control signal to the switch module to control the switch module to switch on or switch off, so as to enable the power drive module to switch to a boost charging state or a driving state; and the control module is further configured to determine state information of the power drive module and perform state identification of the switch module based on the state information of the power drive module, the state control signal and the sampling voltage.

In some embodiments, the power drive module includes an inverter and a motor winding; a first end of each bridge arm of the inverter is electrically connected to the positive electrode of the power battery; a second end of each bridge arm of the inverter is electrically connected to the negative electrode of the power battery; a midpoint of each bridge arm of the inverter is connected to one end of the motor winding; the other end of the motor winding is electrically connected to the first end of the switch module.

In some embodiments, the power drive module further includes a DC support capacitor, a first end of the DC support capacitor is electrically connected to the first end of each bridge arm of the inverter and the positive electrode of the power battery respectively, and a second end of the DC support capacitor is electrically connected to the second end of each bridge arm of the inverter and the negative electrode of the power battery respectively.

In some embodiments, the control module is configured to, after the state control signal controls the switch module to switch on, send first control information to the power drive module, enabling the state information of the power drive module to indicate that the power drive module provides a first reference voltage to the energy storage module; and the control module is further configured to determine, in a case where the first reference voltage is consistent with the sampling voltage, that the switch module is in an on state normally.

In some embodiments, the control module is further configured to, after determining that the switch module is in the on state normally in a case where the first reference voltage is consistent with the sampling voltage, determine that the switch module remains in the on state normally based on the state information of the power drive module meeting a charging current range and the sampling voltage meeting a charging voltage range.

In some embodiments, the control module is configured to, after the state control signal controls the switch module to switch off, send second control information to the power drive module, enabling the state information of the power drive module to indicate that the power drive module provides a second reference voltage to the energy storage module; and the control module is further configured to determine, in a case where the second reference voltage is inconsistent with the sampling voltage, that the switch module in an off state normally.

In some embodiments, the control module is further configured to, after determining that the switch module is in the off state normally in a case where the second reference voltage is inconsistent with the sampling voltage, determine that the switch module remains in the off state normally based on no change in the sampling voltage.

In a second aspect, an embodiment of the disclosure discloses a charging control method. The charging control method is applied to the charging control circuit described in the first aspect, and includes:
sending the state control signal to the switch module to control the switch module to switch on or off, so as to enable the power drive module to switch to the boost charging state or the driving state; and
determining the state information of the power drive module, and performing the state identification of the switch module based on the state information of the power drive module, the state control signal and the sampling voltage.

In some embodiments, determining the state information of the power drive module, and performing the state identification of the switch module based on the state information of the power drive module, the state control signal and the sampling voltage includes:
determining that the state control signal controls the switch module to switch on;
sending first control information to the power drive module to enable the state information of the power drive module to indicate that the power drive module provides a first reference voltage to the energy storage module; and
determining that the switch module is in an on state normally based on the first reference voltage being consistent with the sampling voltage.

In some embodiments, after determining that the switch module is in the on state normally based on the first reference voltage being consistent with the sampling voltage, the method further includes:
determine that the switch module remains in the on state normally based on the state information of the power drive module meeting a charging current range and the sampling voltage meeting a charging voltage range.

In some embodiments, determining the state information of the power drive module, and performing the state identification of the switch module based on the state information of the power drive module, the state control signal and the sampling voltage includes:
determining that the state control signal controls the switch module to switch off;
sending second control information to the power drive module to enable the state information of the power drive module to indicate that the power drive module provides a second reference voltage to the energy storage module; and
determining that the switch module is in an off state normally based on the second reference voltage being inconsistent with the sampling voltage.

In some embodiments, after determining that the switch module is in the off state normally based on the second reference voltage being inconsistent with the sampling voltage, the method further includes:
determining that the switch module remains in the off state normally based on no change in the sampling voltage.

In a third aspect, an embodiment of the disclosure discloses a computer-readable storage medium. The computer-readable storage medium stores a program or an instruction, and the program or the instruction causes a computer to implement the steps of any one of the methods disclosed in the second aspect.

In a fourth aspect, an embodiment of the disclosure discloses a vehicle. The vehicle includes the charging control circuit according to any one of the items in the first aspect.

In a fifth aspect, an embodiment of the disclosure discloses an electronic device, including a processor and a memory. The processor executes the steps of any one of the methods disclosed in the second aspect by invoking a program or an instruction stored in the memory.

In a sixth aspect, an embodiment of the disclosure discloses a computer program product, including a computer-readable storage medium. The computer-readable storage medium stores one or more computer program instructions which, when executed by a processor, implement the steps of any one of the methods disclosed in the second aspect.

The disclosure discloses the charging control circuit, the charging control method and the vehicle. The charging control circuit includes: the power drive module, the energy storage module, the switch module, the detection module and the control module. The first end of the power drive module is electrically connected to the positive electrode of the power battery, the second end of the power drive module is electrically connected to the negative electrode of the power battery, the negative electrode of the charging interface, and the second end of the energy storage module, and the third end of the power drive module is electrically connected to the first end of the switch module. The second end of the switch module is electrically connected to the first end of the energy storage module and the positive electrode of the charging interface respectively. The detection module is electrically connected to the second end of the switch module to acquire the sampling voltage. The control module is configured to send the state control signal to the switch module to control the switch module to switch on or off, so as to enable the power drive module to switch to the boost charging state or the driving state. The control module is further configured to determine the state information of the power drive module and perform state identification of the switch module based on the state information of the power drive module, the state control signal and the sampling voltage. In the embodiment of the disclosure, the switch module is arranged between the first end of the power drive module and the first end of the energy storage module, and there is no need to arrange the switch module between the negative electrode of the power battery and the second end of the energy storage module. When the switch module between the first end of the power drive module and the first end of the energy storage module is switched on, the power drive module switches to the boost charging state. When the switch module between the first end of the power drive module and the first end of the energy storage module is switched off, the power drive module switches to the driving state. Therefore, by switching on or off the switch module between the first end of the power drive module and the first end of the energy storage module, the power drive module can switch to the boost charging state or the driving state, which reduces a number of switch modules required in the charging control circuit, thereby reducing material costs and decreases the space occupied by components. Since the second end of the switch module is electrically connected to the detection module, the detection module is capable of obtaining the sampling voltage at the second end of the switch module. The control module is configured to determine the state information of the power drive module, then the current state of the switch module may be identified based on the state information of the power drive module, the state control signal and the sampling voltage. Compared to arranging detection modules at connection points of a plurality of switch modules, the embodiments of the disclosure arrange only one switch module between the first end of the power drive module and the first end of the energy storage module, thus the sampling voltage at the second end of the switch module can be detected by only one detection module. Therefore, the embodiments of the disclosure can reduce the number of arranged detection modules, solving the problems of high overall cost and large space occupation of the existing boost charging system.

### BRIEF DESCRIPTION OF THE DRAWINGS

FIG. 1 is a schematic diagram of a charging control circuit according to an embodiment of the disclosure.
FIG. 2 is a schematic diagram of a detection module according to an embodiment of the disclosure.
FIG. 3 is a schematic diagram of a charging control circuit according to an embodiment of the disclosure.
FIG. 4 is a schematic diagram of a charging control circuit according to an embodiment of the disclosure.
FIG. 5 is a flowchart of a charging control method according to an embodiment of the disclosure.
FIG. 6 is a flowchart of a charging control method according to an embodiment of the disclosure.
FIG. 7 is a flowchart of a charging control method according to an embodiment of the disclosure.
FIG. 8 is a flowchart of a charging control method according to an embodiment of the disclosure.
FIG. 9 is a flowchart of a charging control method according to an embodiment of the disclosure.
FIG. 10 is a schematic diagram of an electronic device according to an embodiment of the disclosure.

### DETAILED DESCRIPTION

In order to more clearly understand the above-mentioned objects, features and advantages of the disclosure, the solutions of the disclosure are further described below. It should be noted that, without conflict, the embodiments of the disclosure and the features therein may be combined with each other.

Many specific details are described below to fully understand the disclosure, but the disclosure may be implemented in other ways different from those described herein. Obviously, the embodiments in the specification are only part of the embodiments of the disclosure, not all of them.

The disclosure provides a charging control circuit, a charging control method and a vehicle. The charging control circuit, the charging control method and the vehicle disclosed in the embodiments of the disclosure are described exemplarily below with reference to the accompanying drawings.

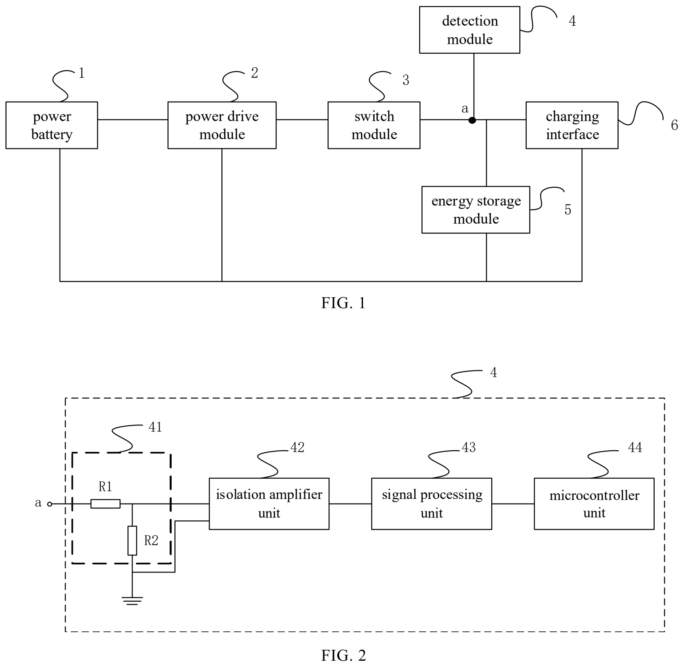

FIG. 1 is a schematic diagram of a charging control circuit according to an embodiment of the disclosure. It should be noted that the charging control circuit of the embodiments of the disclosure is applied to a charging control method of the embodiments of the disclosure, and the charging control circuit of the embodiments of the disclosure may be configured in a vehicle.

As illustrated in FIG. 1, the charging control circuit includes: a power drive module 2, an energy storage module 5, a switch module 3, a detection module 4, and a control module. A first end of the power drive module 2 is electrically connected to a positive electrode of a power battery 1, a second end of the power drive module 2 is electrically connected to a negative electrode of the power battery 1, a negative electrode of a charging interface 6, and a second end of the energy storage module 5. A third end of the power drive module 2 is electrically connected to a first end of the switch module 3. A second end of the switch module 3 is electrically connected to a first end of the energy storage module 5 and a positive electrode of the charging interface 6 respectively. The detection module 4 is electrically connected to the second end of the switch module 3 to acquire a sampling voltage.

The control module is configured to send a state control signal to the switch module 3 to control the switch module 3 to switch on or off, so as to enable the power drive module 2 to switch to a boost charging state or a driving state. The control module is further configured to determine state information of the power drive module 2 and perform state identification of the switch module 3 based on the state information of the power drive module 2, the state control signal and the sampling voltage.

The power drive module 2 refers to a component that can cooperate with the power battery 1 to provide driving force for the vehicle, and can work in coordination with the energy storage module 5 to achieve boost charging for the power battery 1. Exemplarily, the power drive module 2 includes a motor and an inverter 21. The energy storage module 5 refers to a component for storing electrical energy, and the energy storage module 5 can also work in coordination with the power drive module 2 to achieve boost charging for the power battery 1. Exemplarily, the energy storage module 5 may be a capacitor 51. The switch module 3 refers to a component that can be switched on or off. Exemplarily, the switch module 3 may be a relay 31, a transistor, or the like. For example, the charging interface 6 may be a DC charging interface 6.

The detection module 4 refers to a sampling circuit for acquiring the sampling voltage. Exemplarily, FIG. 2 is a schematic diagram of a detection module 4 according to an embodiment of the disclosure. As illustrated in FIG. 2, the detection module 4 includes an isolation amplifier unit 42, a signal processing unit 43 and a voltage dividing unit 41. A first end of the isolation amplifier unit 42 is electrically connected to a sampling point "a" (i.e., the second end of the switch module 3), and a second end of the isolation amplifier unit 42 is electrically connected to a first end of the signal processing unit 43. A second end of the signal processing unit 43 is electrically connected to a microcontroller unit 44. The voltage dividing unit 41 is arranged between the sampling point "a" and the isolation amplifier unit 42, and includes two voltage dividing resistors R1 and R2. The isolation amplifier unit 42 is electrically connected to the sampling point "a" via the voltage dividing unit 41, to acquire the sampling voltage at the sampling point "a". After voltage division by the voltage dividing unit 41 is completed, the isolation amplifier unit 42 isolates a high-voltage side on the left from a low-voltage side on the right. An acquired sampling voltage signal is subjected to preliminary signal processing and filtering by the signal processing unit 43 and then transmitted to the microcontroller unit 44.

In some embodiments, the control module sends the state control signal to the switch module 3 to enable the switch module 3 to be switched on or off. That is, the state control signal includes an on-control signal and an off-control signal. When the control module sends the on-control signal to the switch module 3, the switch module 3 is switched on to enable the power drive module 2 to switch to the boost charging state. In the boost charging state, the power drive module 2 and the energy storage module 5 jointly perform boost charging for the power battery 1. When the control module sends the off-control signal to the switch module 3, the switch module 3 is switched off to enable the power drive module 2 to switch to the driving state. In the driving state, the power battery 1 and the power drive module 2 jointly provide the driving force for the vehicle. That is, by controlling the switch module 3, the power drive module 2 switches between the boost charging state and the driving state. Since the power drive module 2 has two operating states, when the switch module 3 fails to switch on or off, the power battery 1 is unable to normally perform the boost charging, or the power drive module 2 is unable to drive the vehicle normally. Therefore, it is necessary to identify the state of the switch module 3. The control module is also configured to determine state information of the power drive module 2. Exemplarily, the state information of the power drive module 2 includes a current of the power drive module 2 and a first reference voltage or a second reference voltage provided by the power drive module 2 to the energy storage module 5. The first reference voltage and the second reference voltage are reference voltages provided by the power battery 1 to the energy storage module 5 via the power drive module 2 for identifying different states of the switch module 3. Based on the state information of the power drive module 2, the state control signal, and the sampling voltage, the state identification of the switch module 3 can be realized, that is, identifying whether the switch module 3 is normally switched on, normally switched off, normally remains on, or normally remains off, so as to ensure that the power drive module 2 is able to normally switch between the boost charging state and the driving state.

Based on the above configuration, only one switch module 3 is arranged in the charging control circuit. By switching on or off the switch module 3, the power drive module 2 is enabled to switch to the boost charging state or the driving state. The detection module 4 is electrically connected to the second end of the switch module 3, enabling the detection module 4 to acquire the sampling voltage at the second end of the switch module 3. The control module is configured to determine the state information of the power drive module 2, and then the current state of the switch module 3 can be identified based on the state information of the power drive module 2, the state control signal and the sampling voltage. That is, only one switch module 3 is arranged in the charging control circuit to control the switching between the boost charging state and the driving state, which can still meet a requirement of identifying the state of the switch module 3. Moreover, arranging only one switch module 3 reduces a material cost, decreases space occupation of a product, and improves a power density of the product. In addition, in an existing charging control circuit, voltage sampling needed to be performed on a plurality of sampling points in the existing charging control circuit. In the present disclosure, only one switch module 3 is arranged, and during the state identification of the switch module 3, the voltage sampling only needs to be performed on a single sampling point at the second end of the switch module 3, thereby reducing a number of required detection modules 4. Since the isolation amplifier unit 42 in the detection module 4 generally has a high cost, only one detection module 4 is needed to perform the voltage sampling on the single sampling point, such a configuration further reduces a comprehensive cost of consumables. Arranging only one switch module 3 can also effectively reduce a failure probability of a system. When there are too many switch modules 3, it is necessary to control the on or off state of each switch module separately, which significantly increases the failure probability. In conclusion, by arranging one switch module 3 and performing the state identification based on the state information of the power drive module 2, the state control signal and the sampling voltage, not only a requirement for identifying the state of the switch module 3 is met, but also the consumable cost is effectively reduced, the space occupation is decreased, and the system failure probability of the charging control circuit is lowered.

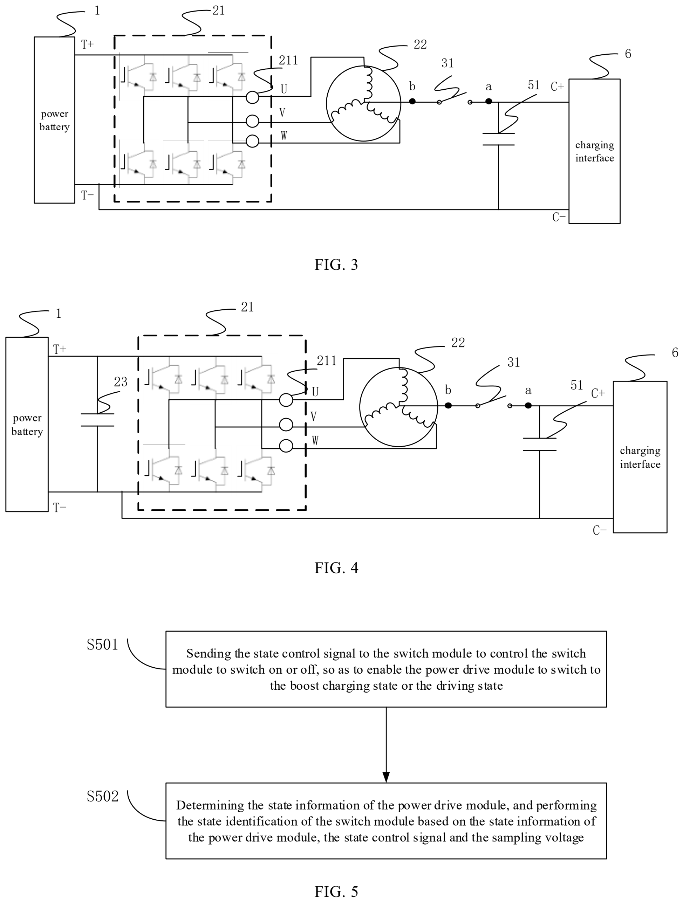

FIG. 3 is a schematic diagram of a charging control circuit according to an embodiment of the disclosure. The power drive module 2 includes the inverter 21 and a motor winding 22. A first end of each bridge arm of the inverter 21 is electrically connected to the positive electrode of the power battery 1, and a second end of each bridge arm of the inverter 21 is electrically connected to the negative electrode of the power battery 1. A midpoint of each bridge arm of the inverter 21 is connected to one end of the motor winding 22, and the other end of the motor winding 22 is electrically connected to the first end of the switch module 3.

Exemplarily, as illustrated in FIG. 3, the inverter 21 includes three bridge arms. The motor winding 22 is a three-phase motor winding 22. The midpoint of each bridge arm in the inverter 21 is electrically connected to points U, V, and W of the three-phase motor winding 22 respectively. When the switch module 3 is switched on, the energy storage module 5, the three-phase motor winding 22 and the three bridge arms in the inverter 21 are used to form a BOOST circuit, which can then perform high-voltage charging on the power battery 1. When the switch module 3 is switched off, the power battery 1 converts DC into alternating current (AC) via the inverter 21 and transmits the AC to the three-phase motor winding 22 to enable the motor to drive the vehicle. With such a configuration, by reusing the inverter 21 and the motor, the inverter 21 and the motor can not only serve as power drive components of the vehicle, but also form the BOOST circuit with the energy storage module 5 to meet an operational requirement of high-voltage charging.

FIG. 4 is a schematic diagram of a charging control circuit according to an embodiment of the disclosure. The power drive module 2 also includes a DC support capacitor 23. A first end of the DC support capacitor 23 is electrically connected to the first end of each bridge arm of the inverter 21 and the positive electrode of the power battery 1 respectively. A second end of the DC support capacitor 23 is electrically connected to the second end of each bridge arm of the inverter 21 and the negative electrode of the power battery 1 respectively.

In some embodiments, the power drive module 2 includes the inverter 21 and the three-phase motor winding 22. As illustrated in FIG. 4, the DC support capacitor 23, also known as a DC-link capacitor, is arranged between the power battery 1 and the inverter 21, to enable the DC support capacitor 23 to absorb a high-amplitude pulse current drawn from the inverter 21, preventing the high-amplitude pulse current from generating a high-amplitude pulse voltage across an impedance of the DC support capacitor 23. Therefore, a voltage fluctuation on a DC bus is maintained within an allowable range, that is, the voltage variation at a terminal of the power battery 1 is maintained within a normal operating range, thereby avoiding damage to the power battery 1.

In some embodiments, the control module is configured to, after the state control signal controls the switch module 3 to switch on, send first control information to the power drive module 2, enabling the state information of the power drive module 2 to indicate that the power drive module 2 provides a first reference voltage to the energy storage module 5. The control module is further configured to determine that, in a case where the first reference voltage is consistent with the sampling voltage, the switch module 3 is normally in an on state.

The first reference voltage is used to compare with the sampling voltage to identify whether the switch module 3 is switched on normally. When the switch module 3 is switched from off to on, the energy storage module 5 is in a non-energy storage state at this time. Therefore, the first reference voltage only needs to be set greater than 0V. Exemplarily, the first reference voltage can be set within 60V, which is a safe voltage range. For example, the first reference voltage can be set as 30V, 50V or 55V, and there is no restriction on a specific set value of the first reference voltage in the present disclosure.

In some embodiments, as illustrated in FIG. 1, when the state control signal of the control module controls the switch module 3 to switch on, i.e., the power drive module 2 needs to switch to the boost charging state, it is thus necessary to perform the state identification on the switch module 3 to determine whether the switch module 3 is switched on normally. The control module sends the first control information to the power drive module 2, enabling the power battery 1 to provide the first reference voltage to the energy storage module 5 via the power drive module 2, and the detection module 4 then acquires the sampling voltage. When the switch module 3 is normally in the on state, the sampling voltage acquired by the detection module 4 connected to the second end of the switch module 3 is consistent with the first reference voltage. When the sampling voltage is consistent with the first reference voltage, it can be determined that the switch module 3 is normally in the on state, i.e., the power drive module 2 can normally switch to the boost charging state. When the sampling voltage is inconsistent with the first reference voltage, it can be determined that the switch module 3 is not in the on state normally, i.e., the power drive module 2 cannot normally switch to the boost charging state. Such a configuration meets a requirement for detecting whether the power drive module 2 normally switches to the boost charging state. Timely feedback is available when the switching to the boost charging state is unsuccessful.

In some embodiments, the control module is further configured to, after determining that the switch module 3 is in the on state normally in a case where the first reference voltage is consistent with the sampling voltage, determine that the switch module 3 remains in the on state normally based on the state information of the power drive module 2 meeting a charging current range and the sampling voltage meeting a charging voltage range.

In some embodiments, as illustrated in FIG. 1, after determining that the switch module 3 is in the on state normally in a case where the first reference voltage is consistent with the sampling voltage, i.e., when the power drive module 2 is in the boost charging state, false switch-off of the switch module 3 at this time is undesirable. The false switch-off of the switch module 3 affects the current normal boost charging. Therefore, it is necessary to identify whether the switch module 3 remains in the on state. When the state information of the power drive module 2 meets the charging current range and the sampling voltage meets the charging voltage range, it is determined that the switch module 3 remains in the on state normally. Exemplarily, the state information of the power drive module 2 includes a current value of the motor winding 22. As illustrated in FIG. 3, a three-phase current of the motor winding 22 is provided by a current monitoring component 221 in the inverter 21. When the current of the motor winding 22 meets the charging current range and the sampling voltage meets the charging voltage range, it is determined that the switch module 3 remains in the on state normally, i.e., the power drive module 2 is continuously in the normal boost charging state. When the current of the motor winding 22 does not meet the charging current range or the sampling voltage does not meet the charging voltage range, it is determined that the power drive module 2 is not in the normal boost charging state. Such a configuration meets a requirement of continuously identifying the on state of the switch module 3 during a boost charging process, thereby determining whether the switch module 3 remains in the on state normally and enabling timely detection of abnormal conditions during the boost charging process.

In some embodiments, the control module is configured to, after the state control signal controls the switch module 3 to switch off, send second control information to the power drive module 2, enabling the state information of the power drive module 2 to indicate that the power drive module 2 provides a second reference voltage to the energy storage module 5. The control module is further configured to determine that, in a case where the second reference voltage is inconsistent with the sampling voltage, the switch module 3 is in an off state normally.

The second reference voltage is used to compare with the sampling voltage to identify whether the switch module 3 is switched off normally, that is, to identify whether the switch module 3 is switched from the on state to the off state, i.e., whether the power drive module 2 switches from the boost charging state to the driving state. Since the energy storage module 5 has completed energy release during the boost charging process of the power battery 1 at an end of the boost charging state, a voltage of the energy storage module 5 is very low at this time, and the second reference voltage only needs to be greater than the voltage of the energy storage module 5 after energy release. Exemplarily, the voltage of the energy storage module 5 after energy release ranges from 0V to 20V. Since values within 60V are considered as safe voltage values, the second reference voltage can be set between 20V and 60V. For example, the second reference voltage can be set as 30V, 40V, 50V or 55V, and there is no restriction on a specific set value of the second reference voltage in the present disclosure.

In some embodiments, as illustrated in FIG. 1, when the state control signal controls the switch module 3 to switch off, i.e., the power drive module 2 needs to switch to the driving state, it is thus necessary to perform the state identification on the switch module 3 to determine whether the switch module 3 is switched off normally. The control module sends the second control information to the power drive module 2, enabling the state information of the power drive module 2 to indicate that the power drive module 2 provides the second reference voltage to the energy storage module 5, and the detection module 4 acquires the sampling voltage. When the switch module 3 is switched off normally, the sampling voltage acquired by the detection module 4 connected to the second end of the switch module 3 is inconsistent with the second reference voltage. When the sampling voltage is inconsistent with the second reference voltage, it can be determined that the switch module 3 is normally in the off state, i.e., the power drive module 2 can normally switch to the driving state. When the sampling voltage is consistent with the second reference voltage, it can be determined that the switch module 3 is not in the off state normally, i.e., the power drive module 2 cannot normally switch to the driving state. Such a configuration meets a requirement for detecting whether the power drive module 2 normally switches to the driving state. Timely feedback is available when the switching to the driving state is unsuccessful.

In some embodiments, the control module is further configured to, after determining that the switch module 3 is in the off state normally in a case where the second reference voltage is inconsistent with the sampling voltage, determine that the switch module 3 remains in the off state normally based on no change in the sampling voltage.

In some embodiments, as illustrated in FIG. 4, after determining that the switch module 3 is in the off state normally in a case where the second reference voltage is inconsistent with the sampling voltage, i.e., when the power drive module 2 is in the driving state, false switch-on of the switch module 3 at this time is undesirable. The false switch-on of the switch module 3 affects normal driving. Therefore, it is necessary to identify whether the switch module 3 remains in the off state. Based on no change in the sampling voltage, it is determined that the switch module 3 remains in the off state normally. A voltage at a neutral point of the motor winding 22 fluctuates when the vehicle is moving. As shown in FIG. 3, the neutral point of the motor winding 22 is electrically connected to the first end of the switch module 3, and the detection module 4 connected to the second end of the switch module 3 acquires the sampling voltage. When there is no change in the sampling voltage, it is determined that the switch module 3 remains in the off state normally, i.e., the power drive module 2 is continuously in the normal driving state. When the sampling voltage fluctuates, it indicates that the switch module 3 fails to remain in the off state normally, and thus it is determined that the power drive module 2 is not in the normal driving state. Such a configuration meets a requirement of continuously identifying the off state of the switch module 3 during a driving process, thereby determining whether the switch module 3 remains in the off state normally and enabling timely detection of abnormal conditions during the driving process.

FIG. 5 is a flowchart of a charging control method according to an embodiment of the disclosure. The charging control method is applied to the charging control circuit in the above embodiment. The method includes step S501 and step S502.

At step S501, the state control signal is sent to the switch module to control the switch module to switch on or off, so as to enable the power drive module to switch to the boost charging state or the driving state.

In some embodiments, when the switch module is switched from off to on, the power drive module switches from the driving state to the boost charging state. When the switch module is switched from on to off, the power drive module switches from the boost charging state to the driving state. By controlling the switch module to switch on or off, it enables the power drive module to switch between the boost charging state and the driving state.

At step S502, state information of the power drive module is determined, and the state identification of the switch module is performed based on the state information of the power drive module, the state control signal and the sampling voltage.

In some embodiments, the state information of the power drive module includes the current of the power drive module and the first reference voltage or the second reference voltage provided by the power drive module to the energy storage module. The first reference voltage and the second reference voltage are reference voltages provided by the power battery to the energy storage module via the power drive module for identifying different states of the switch module. Based on the state information of the power drive module, the state control signal and the sampling voltage, the state identification of the switch module is performed. For example, the state identification of the switch module is performed based on whether the sampling voltage is consistent with the first reference voltage, and/or whether the sampling voltage is consistent with the second reference voltage, and/or whether both the sampling voltage and the current of the power drive module fall within respective preset ranges. The preset ranges refer to a normal charging voltage range for the sampling voltage and a normal charging current range for the current of the power drive module.

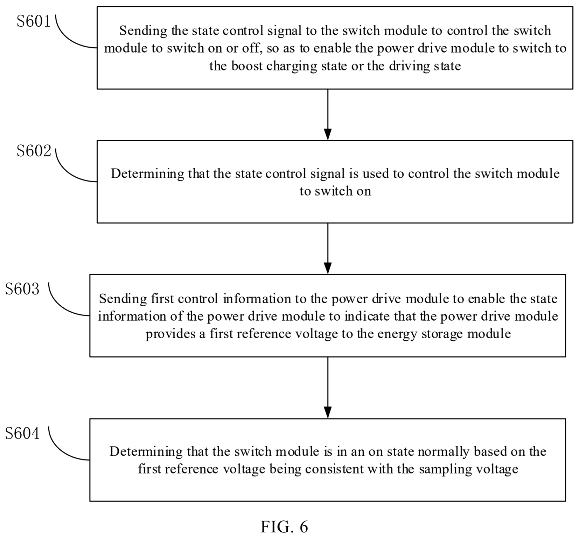

FIG. 6 is a flowchart of a charging control method according to an embodiment of the disclosure. The method includes steps S601-S604.

At step S601, the state control signal is sent to the switch module to control the switch module to switch on or off, so as to enable the power drive module 2 to switch to the boost charging state or the driving state.

At step S602, it is determined that the state control signal controls the switch module to switch on.

In some embodiments, when the state control signal controls the switch module to switch on, i.e., when the power drive module needs to be switched from the driving state to the boost charging state, it is necessary to identify whether the switch module is switched on normally.

At step S603, the first control information is sent to the power drive module 2 to enable the state information of the power drive module to indicate that the power drive module provides the first reference voltage to the energy storage module.

In some embodiments, the first reference voltage is used to compare with the sampling voltage to identify whether the switch module is switched on normally. When the switch module is switched from off to on, the energy storage module is in a non-energy storage state. Therefore, the first reference voltage only needs to be set greater than 0V. The first control information is sent to the power drive module, to configure the state information of the power drive module to indicate that the power drive module provides the first reference voltage to the energy storage module. For example, the first reference voltage from the power battery undergoes is reverse-bucked and output to the energy storage module via the power drive module.

At step S604, it is determined that the switch module is in the on state normally based on the first reference voltage being consistent with the sampling voltage.

In some embodiments, when the switch module is in the on state normally, the sampling voltage acquired by the detection module connected to the second end of the switch module is consistent with the first reference voltage. When the first reference voltage is consistent with the sampling voltage, it is determined that the switch module is normally in the on state, i.e., the power drive module can normally switch to the boost charging state. When the first reference voltage is inconsistent with the sampling voltage, it is determined that the switch module is not the on state normally, i.e., the power drive module cannot normally switch to the boost charging state.

For example, as illustrated in FIG. 1, the sampling voltage at a point "a" is obtained by the detection module 4. When the sampling voltage at the point "a" is consistent with the bucked first reference voltage, the switch module 3 is switched on normally. Otherwise, the switch module 3 is not switched on normally and needs maintenance.

In conclusion, the charging control method disclosed by the embodiment of the disclosure meets a requirement for detecting whether the power drive module normally switches to the boost charging state, which is suitable for a detection scenario where the power drive module switches from the driving state to the boost charging state when the vehicle requires boost charging. Timely feedback is available when the switching to the boost charging state is unsuccessful.

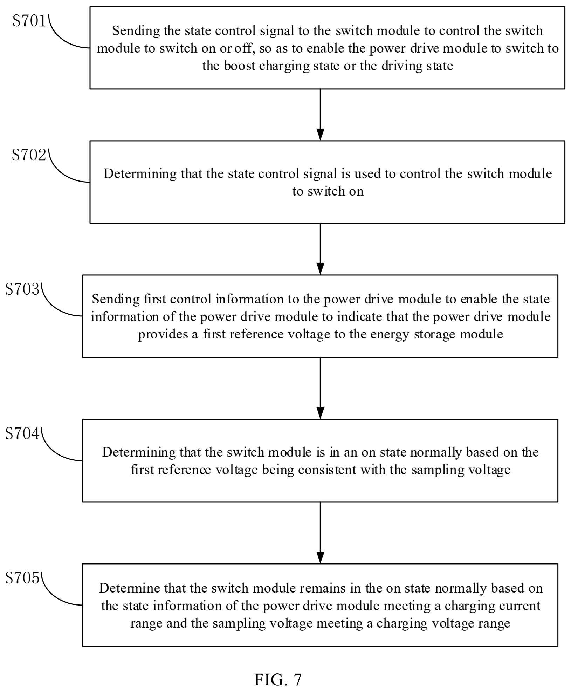

FIG. 7 is a flowchart of a charging control method according to an embodiment of the disclosure. The method includes steps S701-S705.

At step S701, the state control signal is sent to the switch module to control the switch module to switch on or off, so as to enable the power drive module 2 to switch to the boost charging state or the driving state.

At step S702, it is determined that the state control signal controls the switch module to switch on.

At step S703, the first control information is sent to the power drive module to enable the state information of the power drive module to indicate that the power drive module provides the first reference voltage to the energy storage module.

At step S704, it is determined that the switch module is in the on state normally based on the first reference voltage being consistent with the sampling voltage.

In some embodiments, when it is determined that the switch module 3 is in the on state normally, i.e., when the power drive module is in the boost charging state normally, false switch-off of the switch module at this time is undesirable. The false switch-off of the switch module affects the current normal boost charging. Therefore, it is necessary to identify whether the switch module remains in the on state.

At step S705, it is determined that the switch module remains in the on state normally based on the state information of the power drive module meeting the charging current range and the sampling voltage meeting the charging voltage range.

In some embodiments, when the state information of the power drive module meets the charging current range (i.e., when the current of the power drive module meets the charging current range), and the sampling voltage meets the charging voltage range, it is determined that the switch module remains in the on state normally, i.e., the power drive module is continuously in the normal boost charging state. When the current of the power drive module does not meet the charging current range or the sampling voltage does not meet the charging voltage range, it is determined that the power drive module is not in the normal boost charging state.

For example, during the boost charging process, it is necessary to monitor whether the switch module is switched on normally. As illustrated in FIG. 4, the sampling voltage at a point "a" is obtained by the detection module 4, and at the same time, a current of the three-phase motor in the power drive module 2 is monitored. When the sampling voltage at the point "a" is within the normal charging voltage range and the three-phase current is within the normal charging current range, the switch module 3 remains in the on state normally. Otherwise, the switch module 3 does not remain in the on state normally.

In conclusion, the charging control method provided by the embodiment of the disclosure meets a requirement for continuously identifying the on state of the switch module during the boost charging process. This makes it possible to determine whether the switch module remains in the normal on state and timely detect abnormal conditions during the boost charging process. The charging control method is suitable for a detection scenario where the power drive module is in the boost charging state, i.e., during the vehicle's boost charging process.

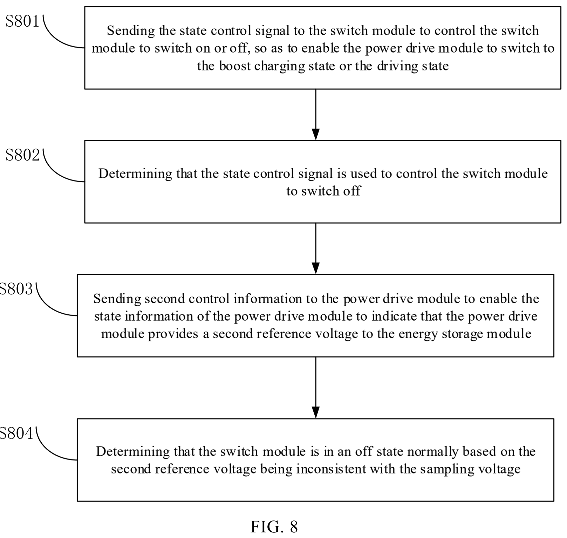

FIG. 8 is a flowchart of a charging control method according to an embodiment of the disclosure. The method includes steps S801-S804.

At step S801, the state control signal is sent to the switch module to control the switch module to switch on or off, so as to enable the power drive module 2 to switch to the boost charging state or the driving state.

At step S802, it is determined that the state control signal controls the switch module to switch off.

In some embodiments, when the state control signal controls the switch module to switch off, i.e., when the power drive module needs to be switched from the boost charging state to the driving state, it is necessary to identify whether the switch module is switched on normally.

At step S803, the second control information is sent to the power drive module to enable the state information of the power drive module 2 to indicate that the power drive module provides the second reference voltage to the energy storage module.

In some embodiments, the second reference voltage is used to compare with the sampling voltage to identify whether the switch module is switched off normally, that is, to identify whether the switch module is switched from the on state to the off state, i.e., whether the power drive module switches from the boost charging state to the driving state. Since the energy storage module has completed the energy release during the boost charging process of the power battery in the boost charging state, the voltage of the energy storage module is very low at this time, and the second reference voltage only needs to be greater than the voltage of the energy storage module after the energy release. The second control information is sent to the power drive module to enable the state information of the power drive module to indicate that the power drive module 2 provides the second reference voltage to the energy storage module.

At step S804, it is determined that the switch module is in an off state normally based on the second reference voltage being inconsistent with the sampling voltage.

For example, when the boost charging has completed, after sending a switch-off instruction to the switch module, it is necessary to detect whether the switch module can be switched off normally. In this working condition, an energy discharge of the energy storage module has been completed before the switch module is switched off. As illustrated in FIG. 1, a slightly higher voltage may be obtained by bucking. The sampling voltage at the point "a" is obtained via the detection module 4, and then it is determined whether the sampling voltage has increased from the voltage of the energy storage module 5 after the energy discharge to this slightly higher voltage, i.e., determining whether the sampling voltage is consistent with the second reference voltage, and further determined whether the switch module 3 is switched off normally. When the sampling voltage at the point "a" does not increase, i.e., the second reference voltage is different from the sampling voltage, it is determined that the switch module 3 is in the off state normally. Otherwise, it is determined that the switch module 3 is not in the off state normally, i.e., the power drive module 2 is not switched to the driving state normally and needs maintenance.

In conclusion, the charging control method provided by the embodiment of the disclosure meets a requirement for determining whether the power drive module normally switches to the driving state during the boost charging process, which is suitable for a detection scenario where the power drive module switches from the boost charging state to the driving state when the vehicle needs to be driven normally after being fully charged. Timely feedback is available when the switching to the driving state is unsuccessful.

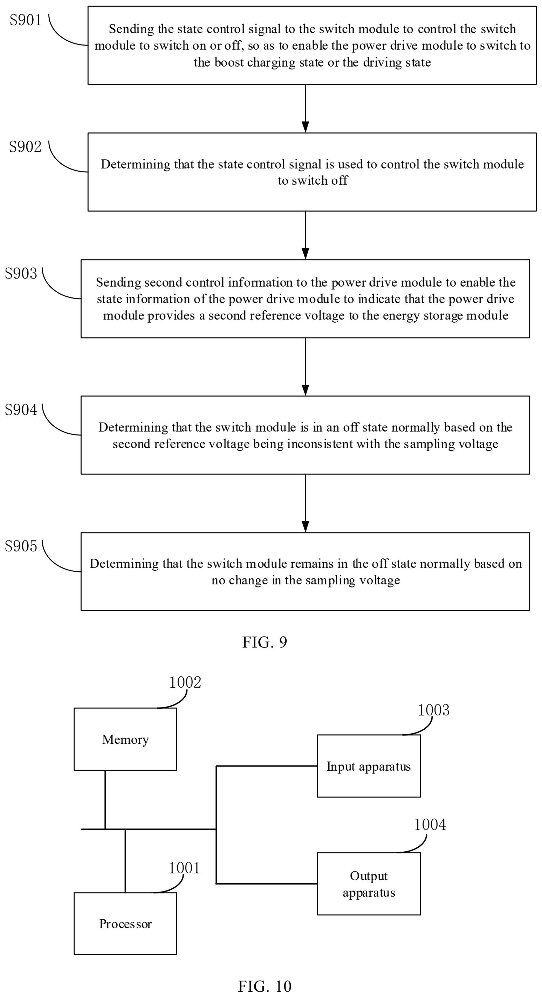

FIG. 9 is a flowchart of a charging control method according to an embodiment of the disclosure. The method includes steps S901-S905.

At step S901, the state control signal is sent to the switch module to control the switch module 3 to switch on or off, so as to enable the power drive module 2 to switch to the boost charging state or the driving state.

At step S902, it is determined that the state control signal controls the switch module to switch off.

At step S903, the second control information is sent to the power drive module to enable the state information of the power drive module to indicate that the power drive module provides the second reference voltage to the energy storage module.

At step S904, it is determined that the switch module is in the off state normally based on the second reference voltage being inconsistent with the sampling voltage.

In some embodiments, when it is determined that the switch module is in the off state normally based on the second reference voltage being inconsistent with the sampling voltage, i.e., the power drive module is in the driving state, false switch-on of the switch module at this time is undesirable. The false switch-on of the switch module 3 affects the normal driving process. Therefore, it is necessary to identify whether the switch module remains in the off state.

At step S905, it is determined that the switch module normally remains in the off state normally based on no change in the sampling voltage.

For example, in the scenario of normal vehicle driving, it is not expected that the switch module is switched on accidentally. As illustrated in FIG. 3, a voltage at a motor neutral point "b" fluctuates when the vehicle is driving. The sampling voltage at the point "a" is obtained by the detection module 4. When the voltage at the point "a" remains stable at 0V without fluctuation, the switch module 3 remains in the off state normally, meaning that the power drive module 2 is continuously in the normal driving state. Otherwise, the switch module 3 does not remain in the off state normally, i.e., the switch module 3 may accidentally switch on and requires maintenance.

In conclusion, the charging control method provided by the embodiment of the disclosure meets a requirement for continuously identifying the off state of the switch module during the driving process. This makes it possible to determine whether the switch module remains in the off state normally and timely detect abnormal conditions during the driving process. The charging control method is suitable for a detection scenario where the power drive module is in the driving state, i.e., during the vehicle's driving process.

The disclosure also provides a computer-readable storage medium. The computer-readable storage medium stores a program or an instruction, and the program or the instruction causes a computer to implement the steps of any method provided by the above implementations.

In some embodiments, when a computer-executable instruction is executed by a processor of the computer, the computer is caused to implement the technical solutions of the charging control method provided by the embodiments of the disclosure to achieve corresponding beneficial effects.

The embodiments of the disclosure also provide a vehicle. The vehicle includes any one circuit of the above-mentioned charging control circuits.

The embodiments of the disclosure include any one circuit of the above-mentioned charging control circuits, and thus can also achieve the same or at least similar technical effects as the above-mentioned charging control circuits.

The embodiments of the disclosure also provide an electronic device. The electronic device includes: a processor and a memory. The processor is configured to execute the steps of any one of the methods provided in the above-mentioned implementations by invoking a program or instruction stored in the memory, so as to achieve corresponding beneficial effects.

FIG. 10 is a schematic diagram of an electronic device according to an embodiment of the disclosure. As illustrated in FIG. 10, the electronic device includes one or more processors 1001 and a memory 1002.

The processor 1001 may be a central processing unit (CPU) or another form of processing unit with data processing capability and/or instruction execution capability, and may control other components in the electronic device to perform desired functions.

The memory 1002 includes one or more computer program products. The computer program product includes various forms of computer-readable storage mediums, such as a volatile memory and/or a non-volatile memory. The volatile memory may be, for example, a random access memory (RAM) or a cache memory. The non-volatile memory may include, for example, a read-only memory (ROM), a hard disk, a flash memory, and the like. The computer-readable storage medium stores one or more computer program instructions, and the processor 1001 may run the program instructions to implement the methods of the embodiments of the disclosure described above and/or other desired functions. The computer-readable storage medium may also store various contents such as input signals, signal components, noise components, etc.

In an example, the electronic device may further include: an input apparatus 1003 and an output apparatus 1004. These components are interconnected via a bus system and/or other forms of connection mechanisms (not shown).

In addition, the input apparatus 1003 may further include, for example, a keyboard, a mouse, etc.

The output apparatus 1004 may output various types of information to outside, including determined distance information, direction information, etc. The output apparatus 1004 may include, for example, a display, a speaker, a printer, a communication network or a remote output apparatus connected to the network.

Certainly, for the sake of simplicity, FIG. 10 only shows some of the components of the electronic device that are related to the disclosure, and some other components, such as a bus and an input/output interface, are omitted. In addition, the electronic device may also include any other appropriate components depending on specific applications.

It should be noted that the above electronic device can be set in a vehicle, specifically in a vehicle-mounted system, such as a battery management system, and can also be set in other terminals in addition to the vehicle, such as a mobile phone, a computer, a smart wearable device and other electronic devices, which is not limited here.

The embodiment of the disclosure also provides a computer program product including a computer-readable storage medium. The computer-readable storage medium stores one or more computer program instructions. When the computer program instructions are executed by a processor, the processor is caused to execute the steps of any method provided in the above implementations to achieve corresponding beneficial effects.

It should be noted that the relational terms herein, such as "first" and "second", are used only for differentiating one entity or operation from another entity or operation, which however do not necessarily require or imply that there should be any real relationship or sequence between them. Moreover, the terms "comprise" or any other variations thereof are meant to cover non-exclusive inclusion, so that the process, method, article or device comprising a series of elements not only comprises those elements, but also comprises other elements that are not explicitly listed or also comprises the inherent elements of the said process, method, article or device. In the case that there are no more restrictions, an element qualified by the statement "comprises a..." does not exclude the presence of additional identical elements in the process, method, article or device that comprises the said element.

The technical solutions of the disclosure have been described in combination with the preferred embodiments shown in the accompanying drawings. However, it is easy for those skilled in the art to understand that the protection scope of the disclosure is obviously not limited to these specific implementations. Without departing from the principles of the disclosure, those skilled in the art may make equivalent changes or substitutions to the relevant technical features, and the technical solutions consisting of these changes or substitutions shall fall within the scope of protection of the disclosure.

## Claims

1. A charging control circuit, comprising: a power drive module, an energy storage module, a switch module, a detection module, and a control module;
wherein a first end of the power drive module is electrically connected to a positive electrode of a power battery; a second end of the power drive module is electrically connected to a negative electrode of the power battery, a negative terminal of a charging interface, and a second end of the energy storage module; and a third end of the power drive module is electrically connected to a first end of the switch module; a second end of the switch module is electrically connected to a first end of the energy storage module and a positive terminal of the charging interface respectively; the detection module is electrically connected to the second end of the switch module to acquire a sampling voltage; and
wherein the control module is configured to send a state control signal to the switch module to control the switch module to switch on or switch off, so as to enable the power drive module to switch to a boost charging state or a driving state; and the control module is further configured to determine state information of the power drive module and perform state identification of the switch module based on the state information of the power drive module, the state control signal and the sampling voltage.

2. The charging control circuit of claim 1, wherein the power drive module comprises an inverter and a motor winding; a first end of each bridge arm of the inverter is electrically connected to the positive electrode of the power battery; a second end of each bridge arm of the inverter is electrically connected to the negative electrode of the power battery; a midpoint of each bridge arm of the inverter is connected to one end of the motor winding; the other end of the motor winding is electrically connected to the first end of the switch module.

3. The charging control circuit of claim 1, wherein the power drive module further comprises a direct current (DC)-link capacitor, a first end of the DC support capacitor is electrically connected to the first end of each bridge arm of the inverter and the positive electrode of the power battery respectively, and a second end of the DC support capacitor is electrically connected to the second end of each bridge arm of the inverter and the negative electrode of the power battery respectively.

4. The charging control circuit of claim 1, wherein the control module is configured to, after the state control signal controls the switch module to switch on, send first control information to the power drive module, enabling the state information of the power drive module to indicate that the power drive module provides a first reference voltage to the energy storage module; and the control module is further configured to determine, in a case where the first reference voltage is consistent with the sampling voltage, that the switch module is in an on state normally.

5. The charging control circuit of claim 1, wherein the control module is further configured to, after determining that the switch module is in the on state normally in a case where the first reference voltage is consistent with the sampling voltage, determine that the switch module remains in the on state normally based on the state information of the power drive module meeting a charging current range and the sampling voltage meeting a charging voltage range.

6. The charging control circuit of claim 1, wherein the control module is configured to, after the state control signal controls the switch module to switch off, send second control information to the power drive module, enabling the state information of the power drive module to indicate that the power drive module provides a second reference voltage to the energy storage module; and the control module is further configured to determine, in a case where the second reference voltage is inconsistent with the sampling voltage, that the switch module in an off state normally.

7. The charging control circuit of claim 6, wherein the control module is further configured to, after determining that the switch module is in the off state normally in a case where the second reference voltage is inconsistent with the sampling voltage, determine that the switch module remains in the off state normally based on no change in the sampling voltage.

8. A charging control method, applied to the charging control circuit according to any one of claims 1-7, comprising:
sending the state control signal to the switch module to control the switch module to switch on or off, so as to enable the power drive module to switch to the boost charging state or the driving state; and
determining the state information of the power drive module, and performing the state identification of the switch module based on the state information of the power drive module, the state control signal and the sampling voltage.

9. The charging control method of claim 8, wherein determining the state information of the power drive module, and performing the state identification of the switch module based on the state information of the power drive module, the state control signal and the sampling voltage comprises:
determining that the state control signal controls the switch module to switch on;
sending first control information to the power drive module to enable the state information of the power drive module to indicate that the power drive module provides a first reference voltage to the energy storage module; and
determining that the switch module is in an on state normally based on the first reference voltage being consistent with the sampling voltage.

10. The charging control method of claim 9, wherein after determining that the switch module is in the on state normally based on the first reference voltage being consistent with the sampling voltage, the method further comprises:
determine that the switch module remains in the on state normally based on the state information of the power drive module meeting a charging current range and the sampling voltage meeting a charging voltage range.

11. The charging control method of claim 8, wherein determining the state information of the power drive module, and performing the state identification of the switch module based on the state information of the power drive module, the state control signal and the sampling voltage comprises:
determining that the state control signal controls the switch module to switch off;
sending second control information to the power drive module to enable the state information of the power drive module to indicate that the power drive module provides a second reference voltage to the energy storage module; and
determining that the switch module is in an off state normally based on the second reference voltage being inconsistent with the sampling voltage.

12. The charging control method of claim 11, wherein after determining that the switch module is in the off state normally based on the second reference voltage being inconsistent with the sampling voltage, the method further comprises:
determining that the switch module remains in the off state normally based on no change in the sampling voltage.

13. A computer-readable storage medium storing a program or an instruction, wherein the program or the instruction causes a computer to execute the steps of the method according to any one of claims 8-12.

14. A vehicle, comprising the charging control circuit according to any one of claims 1-7.

15. An electronic device, comprising a processor and a memory, wherein the processor executes the steps of the method according to any one of claims 8-12 by invoking a program or an instruction stored in the memory.

16. A computer program product, comprising a computer-readable storage medium, wherein the computer-readable storage medium stores one or more computer program instructions which, when executed by a processor, implement the steps of the method according to any one of claims 8-12.
